# EUROPÄISCHE PATENTSCHRIFT

(11) **EP 0 477 744 B1**
(45) Veröffentlichungstag und Bekanntmachung des Hinweises auf die Patenterteilung: **02.01.1997**
(21) Anmeldenummer: 91115805.3
(22) Anmeldetag: 18.09.1991
(51) Int. Cl.: G01K 7/18, G01L 19/00

(54) **Temperatursensor**
Temperature sensor
Capteur de températures

(30) Priorität: 25.09.1990 DE 9013464 U
(43) Veröffentlichungstag der Anmeldung: 01.04.1992
(73) Patentinhaber: Arnheiter, Bernd, D-41468 Neuss (DE)
(72) Erfinder: Arnheiter, Bernd, D-41468 Neuss (DE)
(74) Vertreter: Paul, Dieter-Alfred, Dipl.-Ing.

(56) Entgegenhaltungen:
- US-A- 4 139 833
- PATENT ABSTRACTS OF JAPAN vol. 14, no. 317 (P-1073) 9. Juli 1990; & JP-A-02 102 472
- PATENT ABSTRACTS OF JAPAN vol. 6, no. 265 (P-165)(1143) 24. Dezember 1982; & JP-A-57 160 015

## Beschreibung

Die Erfindung betrifft einen elektrischen Temperatursensor mit einem Isolator, einem auf dem Isolator aufgebrachten Haftvermittler und einem auf dem Haftvermittler sitzenden Temperaturwiderstand.

Solche Temperatursensoren sind beispielsweise in der DE-PS 24 50̸ 551, DE-PS 31 46 0̸20̸ und DE-PS 36 0̸3 785 beschrieben. Sie haben sämtlich einen im wesentlichen dreischichtigen Aufbau, wobei die erste Schicht von einem starren Träger gebildet wird, der gleichzeitig als Isolator gegenüber dem Gegenstand, an dem er bestimmungsgemäß angebracht werden soll, dient. Als Material für den Träger werden Aluminiumoxid (DE-PS 24 50̸ 551, DE-PS 31 46 0̸20̸) oder Silizium (DE-PS 36 0̸3 785) vorgeschlagen. Die genannten Trägermaterialien eignen sich nicht für den direkten Auftrag des Temperaturwiderstandes, insbesondere wenn dieser - wie allgemein üblich - in Dünnschichttechnologie aufgebracht wird. Deshalb werden als Haftvermittler - und auch als chemische Trennschichten - dienende Zwischenschichten aufgebracht. Für Träger aus Aluminiumoxid werden hierfür seltene Erden, Titan und Eisen (DE-PS 24 50̸ 551) sowie Titan und Kupfer (DE-PS 31 46 0̸20̸) vorgeschlagen. Für den Träger aus Silizium wird als Zwischenschicht Aluminiumoxid empfohlen (DE-PS 36 0̸3 785), um die Haftung zu verbessern und eine Legierungsbildung zwischen dem Temperaturwiderstand und dem Träger zu vermeiden.

Als Temperaturwiderstand werden im allgemeinen aufgedampfte Platin-, Nickel oder Kupferschichten verwendet, wobei sich das erstgenannte Material inzwischen wegen seines linearen Widerstandskoeffizienten durchgesetzt hat.

Vorgänger der gattungsgemäßen Temperatursensoren waren solche, bei denen der Temperaturwiderstand unmittelbar auf den Träger aufgebracht wurde, und zwar mittels Hochvakuumverdampfung oder Kathodenzerstäubung (DE-PS 828 930̸, DE-AS 25 27 739). Dabei wurde auch schon vorgeschlagen, als Träger starre Glastäfelchen oder -platten zu verwenden. Solche Sensoren haben sich jedoch wegen ihrer technischen Mängel nicht durchsetzen können (vgl. DE-PS 24 50̸ 551, Spalte 1, Zeilen 49 bis 67). Glasträger sind zwar preiswert, haben jedoch eine schlechte Haftung zum Temperaturwiderstand und keinen geeigneten Wärmewiderstand (vgl. DE-PS 36 0̸3 785, Spalte 2, Zeilen 38 bis 41).

In der DE-OS 23 27 662 ist eine Zwischenlösung vorgeschlagen, bei der auf einer starren Trägerunterlage eine hoch-aluminiumoxidhaltige Glasschicht aufgebracht ist, in die der Temperaturwiderstand eingeschlossen ist. Verfahrensmäßig wird dabei so vorgegangen, daß auf eine starre Unterlage aus Aluminiumoxid oder einem Saphir hoch-aluminiumoxidhaltiges Glas mittels Kathodenzerstäubung aufgebracht, dann der Temperaturwiderstand aufgestäubt und nach selektiver Entfernung eines Teils des Temperaturwiderstandes durch Ätzen eine Deckschicht aus hoch-aluminiumoxidhaltigem Glas aufgebracht wird. Auch diese Lösung hat sich nicht bewährt.

Die gattungsgemäßen Temperatursensoren haben zwar befriedigende Meßeigenschaften, sind jedoch in der Herstellung teuer, da sie nach dem Schichtaufbau sämtlich einer Temperaturbehandlung bedürfen, damit sich ein linearer Widerstandsverlauf über die Temperatur ergibt.

Der Erfindung liegt deshalb die Aufgabe zugrunde, einen Temperatursensor der eingangs genannten Art so auszubilden, daß er bei guten Meßeigenschaften und lang dauernder Haltbarkeit niedrige Herstellungskosten verursacht.

Diese Aufgabe wird erfindungsgemäß dadurch gelöst, daß der Isolator als eine auf einen Träger aufgebrachte Glasschicht mit nicht mehr als 10̸ µm Dicke ausgebildet ist.

Erfindungsgemäß bildet hier die Glasschicht nicht den Träger selbst. Vielmehr hat die Glasschicht nur reine Isolierfunktion sowohl in elektrischer als auch chemischer Hinsicht. Für den Sensor kann dabei jeder Träger verwendet werden. Den Träger kann dabei auch der Gegenstand - beispielsweise ein elektronisches Bauelement - bilden, auf den der Temperatursensor bestimmungsgemäß angebracht werden soll. Die Glasschicht, der Haftvermittler und der Temperaturwiderstand werden dann direkt auf diesen Gegenstand mittels bekannter Methoden der Dünnschichttechnologie, beispielsweise Hochvakuumverdampfung, Kathodenzerstäubung oder Ionenplattierung, aufgebracht. Da die Glasschicht nur eine relativ geringe Dicke hat, wirkt sich deren ansonsten nachteilige Wärmewiderstand nicht nennenswert aus.

Von besonderem Vorteil ist, daß - wie sich herausgestellt hat - dieser Temperatursensor keiner anschließenden Wärmebehandlung (Tempern) bedarf, vielmehr nach dem Schichtaufbau sofort einsatzfähig ist. Dies spart erhebliche Kosten.

Sofern der Temperatursensor nicht direkt auf den Gegenstand, dessen Temperatur beobachtet werden soll, aufgebracht wird, kommen als Träger insbesondere Metallbleche oder -folien in Frage, die eine hohe Temperaturleitfähigkeit haben. Aber auch andere Träger, wie beispielsweise Kunststoffolien, sind - wenn die zu messenden Temperaturen nicht zu hoch sind - geeignet.

Als besonders wirksamer Haftvermittler zwischen der Glasschicht und dem Temperaturwiderstand hat sich eine dünne Aluminiumoxidschicht bewährt, die mittels Hochvakuumverdampfung oder Kathodenzerstäubung auf die Glasschicht aufgebracht wird, und zwar möglichst in einer Dicke von nur etwa 10̸ nm. Dies ist einerseits für eine gute Haftung ausreichend, andererseits wird eine Legierungsbildung mit dem Temperaturwiderstand oder eine Beeinflussung von dessen Widerstandsverhaltens vermieden.

Nach einem weiteren Merkmal der Erfindung ist vorgesehen, daß der Träger die Membran eines Drucksensors ist, wobei der Temperaturwiderstand am äußeren Membranrand angeordnet ist. Solche Drucksensoren sind an sich bekannt (G. Schanz, Sensoren, Dr. Alfred Hüthig Verlag, Heidelberg, 1986, Seite 292, 296). Sie haben eine auf Grund von Druckdifferenzen auslenkende Membran, auf der Meßwiderstände, beispielsweise Dehnungsmeßstreifen, angeordnet sind, deren elektrischer Widerstand sich auf Grund der Verformung der Membran ändert, was meßtechnisch mittels einer Brückenschaltung erfaßt werden kann. Dabei haben solche Drucksensoren zur Oberflächenisolierung der Meßwiderstände schon von vornherein eine Glasschichtabdeckung, so daß sich der erfindungsgemäße Temperatursensor durch Aufbringen des Haftvermittlers und des Temperaturwiderstandes herstellen läßt. Dabei wird der Temperaturwiderstand erfindungsgemäß nur am Rand der Membran angeordnet, da die Membran in diesem Bereich keine oder nur geringfügige Verformungen erleidet, die möglicherweise die Linearität des Temperaturwiderstandes beeinflussen könnten. Man erhält auf diese Weise eine außerordentlich vorteilhaft einsetzbare Kombination aus Druck- und Temperatursensor, wobei sich diese Kombination durch einfachen und platzsparenden Aufbau und geringe Herstellungskosten auszeichnet.

Der Temperaturwiderstand ist zweckmäßigerweise als offener Ring ausgebildet, wobei auch elektrische Brücken vorgesehen sein können, um nachträglich den Widerstandswert zu beeinflussen.

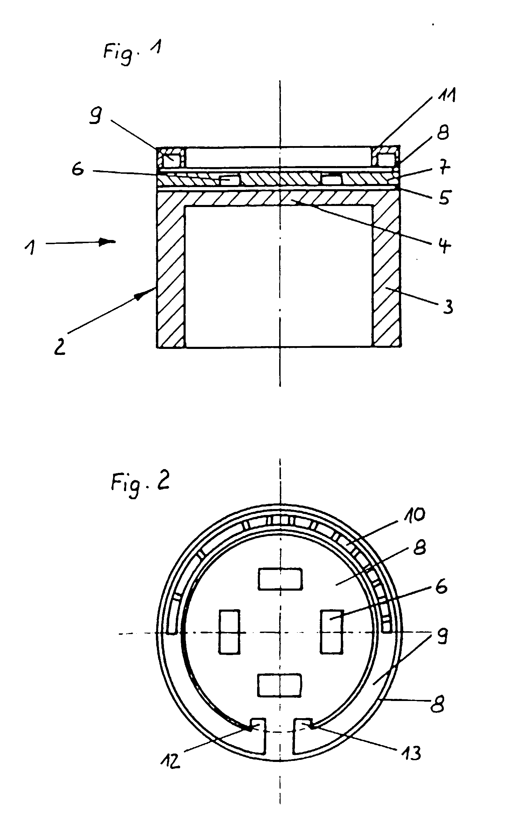

In der Zeichnung ist die Erfindung an Hand eines Ausführungsbeispiels näher veranschaulicht. Es zeigen:
- Figur (1): einen Vertikalschnitt durch einen kombinierten Druck- und Temperatursensor und
- Figur (2): eine Draufsicht auf den Druck- und Temperatursensor gemäß Figur (1).

Der dargestellte Druck- und Temperatursensor (1) hat einen hutförmigen, nach unten offenen Sensorkörper (2), der aus einer Ringzylinderwandung (3) und einer deren Oberseite abschließenden Druckmembran (4) besteht. Die Druckmembran (4) ist so dünn ausgebildet, daß auf sie einwirkende Druckdifferenzen zu Auswölbungen führen.

Auf die Oberseite der Druckmembran (4) ist eine erste Glasschicht (5) als Isolatorschicht aufgebracht. Diese Glasschicht (5) trägt vier Dehnmeßstreifen (6), die über eine hier nicht näher dargestellte Brückenschaltung miteinander verbunden sind. Sie erfassen die Auswölbungen der Druckmembran (4), wobei sich ihr elektrischer Widerstand ändert. Die Dehnmeßstreifen (6) sind in einer zweiten Glasschicht (7) eingeschlossen und damit elektrisch isoliert.

Auf diese zweite Glasschicht (7) ist ein dünner Haftvermittler in Form einer Aluminiumoxidschicht (8) mit einer Dicke von etwa 10̸ nm aufgebracht. Er bietet eine Haftunterlage für einen ringförmig auf den Rand der Druckmembran (4) aufgebrachten Temperaturwiderstand (9) aus Platin. Dieser weist zur Beeinflussung des Widerstandswertes elektrische Brücken (10̸) auf und ist von einer dritten Glasschi-cht (11) eingeschlossen. Aus ihr herausragende Vorsprünge (12, 13) dienen als Kontaktanschlüsse.

Die einzelnen Schichten können mit den üblichen Dünnschichttechnologien aufgebracht sein.

## Patentansprüche

1. Elektrischer Temperatursensor mit einem Isolator, einem auf den Isolator aufgebrachten Haftvermittler und einem auf den Haftvermittler sitzenden Temperaturwiderstand, dadurch gekennzeichnet, daß der Isolator als eine auf einen Träger (2) aufgebrachte Glasschicht (7) mit nicht mehr als 10̸ µm Dicke ausgebildet ist.

2. Temperatursensor nach Anspruch 1,
dadurch gekennzeichnet, daß der Haftvermittler als Aluminiumoxidschicht (8) ausgebildet ist.

3. Temperatursensor nach Anspruch 2,
dadurch gekennzeichnet, daß die Aluminiumoxidschicht (8) eine Dicke von etwa 10̸ nm hat.

4. Temperatursensor nach einem der Ansprüche 1 bis 3,
dadurch gekennzeichnet,
daß der Träger die Membran (4) eines Drucksensors (1) ist, wobei der Temperaturwiderstand (9) am äußeren Membranrand angeordnet ist.

5. Temperatursensor nach Anspruch 4,
dadurch gekennzeichnet, daß der Temperaturwiderstand (9) als offener Ring ausgebildet ist.

6. Temperatursensor nach Anspruch 4 oder 5,
dadurch gekennzeichnet, daß der Temperaturwiderstand (9) Durchbrechungen (10̸) aufweist.

7. Verfahren zum Aufbringen eines elektrischen Temeperatursensors nach einem der Ansprüche 1 bis 3 auf einen Gegenstand,
dadurch gekennzeichnet, daß zunächst eine Glasschicht (7) mit nicht mehr als 10̸ µm Dicke in Dünnschichttechnologie aufgebracht, darauf dann ein Haftvermittler (8) aufgetragen und schließlich ein Temperaturwiderstand (9) aufgebracht wird.

## Claims

1. An electrical temperature sensor having an insulator, a bonding agent deposited on the insulator and a temperature resistor seated on the bonding agent, characterised in that the insulator is constructed as a glass film (7) which is deposited on a support (2) and which has a thickness of not more than 10 µm.

2. A temperature sensor according to claim 1,
characterised in that the bonding agent is constructed as an alumina film (8).

3. A temperature sensor according to claim 2,
characterised in that the alumina film (8) has a thickness of about 10 nm.

4. A temperature sensor according to any one of claims 1 to 3,
characterised in that
the support is the diaphragm (4) of a pressure sensor (1), wherein the temperature resistor (9) is disposed at the outer edge of the diaphragm.

5. A temperature sensor according to claim 4,
characterised in that the temperature resistor (9) is constructed as an open ring.

6. A temperature sensor according to claim 4 or 5,
characterised in that the temperature resistor (9) comprises openings (10).

7. A method of depositing an electrical temperature sensor according to any one of claims 1 to 3 on an object,
characterised in that a glass film (7) which has a thickness of not more than 10 µm is first deposited by thin film technology, a bonding agent (8) is then deposited thereon, and finally a temperature resistor (9) is deposited.

## Revendications

1. Capteur de température électrique comprenant un isolant, un agent adhésif appliqué sur l'isolant et une thermistance posée sur l'agent adhésif, caractérisé en ce que l'isolant est réalisé en tant que couche de verre (7) appliquée sur un support (2) et présentant une épaisseur inférieure ou égale à 10 µm.

2. Capteur de température selon la revendication 1, caractérisé en ce que l'agent adhésif est réalisé en tant que couche d'oxyde d'aluminium (8).

3. Capteur de température selon la revendication 2, caractérisé en ce que la couche d'oxyde d'aluminium (8) présente une épaisseur d'environ 10 nm.

4. Capteur de température selon l'une des revendications 1 à 3, caractérisé en ce que le support est la membrane (4) d'un capteur de pression (1), la thermistance (9) étant placée sur le bord extérieur de la membrane.

5. Capteur de température selon la revendication 4, caractérisé en ce que la thermistance (9) est réalisée en tant qu'anneau ouvert.

6. Capteur de température selon la revendication 4 ou 5, caractérisé en ce que la thermistance (9) présente des ouvertures (10).

7. Procédé pour appliquer un capteur de température électrique selon l'une des revendications 1 à 3 sur un objet, caractérisé en ce qu'on applique dans un premier temps une couche de verre (7) d'une épaisseur inférieure ou égale à 10 µm par la technologie des couches minces, puis un agent adhésif (8) et enfin une thermistance (9).
